# EUROPÄISCHE PATENTSCHRIFT

(11) **EP 1 784 442 B1**
(45) Veröffentlichungstag und Bekanntmachung des Hinweises auf die Patenterteilung: **07.10.2009**
(21) Anmeldenummer: 05782874.1
(22) Anmeldetag: 18.08.2005
(51) Int. Cl.: C08G 77/458, C08G 18/61

(54) **VERNETZBARE SILOXAN-HARNSTOFF-COPOLYMERE**
CROSSLINKABLE SILOXANE UREA COPOLYMERS
COPOLYMERES SILOXANE-UREE RETICULABLES

(30) Priorität: 26.08.2004 DE 102004041379
(43) Veröffentlichungstag der Anmeldung: 16.05.2007
(73) Patentinhaber: Wacker Chemie AG, 81737 München (DE)
(72) Erfinder: ZICHE, Wolfgang, 84489 Burghausen (DE); SCHÄFER, Oliver, 84489 Burghausen (DE)
(74) Vertreter: Budczinski, Angelika
(86) Internationale Anmeldenummer: PCT/EP2005/008966
(87) Internationale Veröffentlichungsnummer: WO 2006/021371

(56) Entgegenhaltungen:
- US-A- 5 221 724
- US-A1- 2002 028 901
- US-A1- 2002 161 114
- US-B1- 6 750 309

## Beschreibung

Die Erfindung betrifft durch Strahlung vernetzbare Organopolysiloxan-Polyharnstoff-Blockcopolymere, Verfahren zu deren Herstellung sowie deren Verwendung.

Organopolysiloxan-Polyharnstoff-Blockcopolymere sind bekannt und können z.B. aus aminoalkylterminierten Siloxanen und Diisocyanaten hergestellt werden.

Durch die Ausbildung von Wasserstoffbrücken zwischen den Harnstoffgruppen können solche Polymere thermoplastische Elastomere sein, d.h. oberhalb des Erweichungspunktes sind sie plastisch, während sie darunter elastische Eigenschaften haben. Damit können sie z.B. als Schmelzkleber verwendet werden. Nachteilig daran ist, dass durch Temperaturerhöhung über den Erweichungspunkt hinaus die Verklebung wieder reversibel ist. Zudem unterliegen Formkörper oder Verklebungen, die aus solchen Polymeren hergestellt wurden einem kalten Fluss, weil sich Wasserstoffbrücken auch unterhalb des Erweichungspunktes ständig lösen und neu knüpfen können, so dass Verformungen und deshalb Versagen der gewünschten Funktion möglich sind. Damit ist der Einsatzbereich limitiert auf Anwendungen, bei denen keine erhöhten Temperaturen und/oder Kräfte auf das thermoplastische Elastomer einwirken.

Eine Lösung des Problems besteht darin, die einzelnen Polymerketten durch zusätzlich mit kovalenten, also thermisch nicht reversiblen, Bindungen zu vernetzen. Werden die thermoplastischen Elastomere in der Herstellung durch Verwendung von z.B. trifunktionellen Bausteinen vernetzt, werden die Verarbeitungseigenschaften (z.B. Schmelzeviskosität) negativ beeinflusst. Eine Vernetzung nach der Applikation ist deshalb sinnvoller. Lichthärtbare Elastomere sind bekannt und z.B. in DE-A 42 11 391 beschrieben. Photohärtbare flüssige Silikonzusammensetzungen sind beispielweise in US-A 5 635 544 beschrieben. Lichtempfindliche thermoplastische Zusammensetzungen sind in US-A 5 053 316 beschrieben. In US 2002/028901 A1 werden lineare Copolymere beschrieben, die durch Wechselwirkungen Feststoffe ausbilden, aus denen feste Formkörper hergestellt werden können.

Gegenstand der Erfindung sind vernetzbare Massen enthaltend
(i) Copolymere der allgemeinen Formel

   **R'-[(A)ₐ(B)_{b}(C)_{c}]-R"** **(I),**

   worin
   (A) gleich oder verschieden sein kann und eine Einheit der Formel **(II)**

      **-[CO-NH-Z-NH-CO-ND-Y-Si(OR¹)ₒR₂₋ₒ-(O-SiR_{q}R⁵_{2-q})ₙ-O-Si(OR¹)ₒR₂₋ₒ-Y-ND]-,**
   (B) gleich oder verschieden sein kann und eine Einheit der Formel

      **-[CO-NH-Z-NH-CO-NR⁴-G-NR⁴]-** **(III)**

      und
   (C) gleich oder verschieden sein kann und eine Einheit der Formel

      **-[CO-NH-Z-NH-CO-E-X-E]-** **(IV)**

      darstellen, wobei
      - **X**: gleich oder verschieden sein kann und einen gegebenenfalls durch Fluor, Chlor, C₁-C₆-Alkyl- oder C₁-C₆-Alkylester sub- stituierten Alkylenrest mit 1 bis 700 Kohlenstoffatomen bedeutet, in dem einander nicht benachbarte Methylenein- heiten durch Gruppen -O-, -COO-, -OCO- oder -OCOO- ersetzt sein können, oder gegebenenfalls substituierten Arylenrest mit 6 bis 22 Kohlenstoffatomen bedeutet,
      - **Y**: gleich oder verschieden sein kann und einen zweiwertigen Kohlenwasserstoffrest mit 1 bis 30 Kohlenstoffatomen, in dem einander nicht benachbarte Methyleneinheiten durch Gruppen -O- ersetzt sein können, oder den Rest -(CH₂)₃-NH- SiR₂-(CH₂)₃-NH- darstellt,
      - **Z**: gleich oder verschieden sein kann und einen zweiwertigen, gegebenenfalls durch Fluor oder Chlor substituierten Koh- lenwasserstoffrest mit 1 bis 30 Kohlenstoffatomen bedeu- tet,
      - **D**: gleich oder verschieden sein kann und Wasserstoffatom oder einen einwertigen, gegebenenfalls substituierten Kohlen- wasserstoffrest darstellt,
      - **E**: gleich oder verschieden sein kann und ein Sauerstoffatom oder eine Aminogruppe -ND- darstellt,
      - **R**: gleich oder verschieden sein kann und einen einwertigen, gegebenenfalls durch Fluor oder Chlor substituierten Koh- lenwasserstoffrest mit 1 bis 20 Kohlenstoffatomen bedeu- tet,
      - **R¹**: gleich oder verschieden sein kann und Wasserstoffatom oder einen einwertigen, gegebenenfalls durch Fluor, Chlor oder Organyloxygruppen substituierten Kohlenwasserstoffrest mit 1 bis 20 Kohlenstoffatomen, -(C=O)-R oder -N=CR₂ darstellt,
      - **R⁴**: gleich oder verschieden sein kann und einen Rest der For- mel -Z'-SiRₚ(OR¹)₃₋ₚ mit **Z'** gleich einer für Z oben angege- benen Bedeutung und p gleich 0, 1 oder 2, Wasserstoffatom oder einen einwertigen, gegebenenfalls substituierten Koh- lenwasserstoffrest bedeutet,
      - **R⁵**: gleich oder verschieden sein kann und einen einwertigen, gegebenenfalls substituierten, gegebenenfalls durch Sauer- stoffatome unterbrochenen, aliphathische Kohlenstoff-Koh- lenstoff-Mehrfachbindung aufweisenden Kohlenwasserstoff- rest bedeutet,
      - **G**: gleich oder verschieden sein kann und eine für Z angegebe- ne Bedeutung hat,
      - **R"**: Wasserstoffatom oder einen Rest -CO-NH-Z-NCO, bevorzugt Wasserstoffatom, bedeutet,
      - **R'**: **im Fall von R' gleich Wasserstoffatom** einen Rest HND-Y-Si(OR¹)ₒR₂₋ₒ-(O-SiR_{q}R⁵_{2-q})ₙ-O-Si(OR¹)ₒR₂₋ₒ-Y-ND-, HNR⁴-G-NR⁴- oder HE-X-E-, bevorzugt HND-Y-Si(OR¹)ₒR₂₋ₒ-(O-SiR_{q}R⁵_{2-q})ₙ-O-Si(OR¹)ₒR₂₋ₒ-Y-ND- oder HNR⁴-G-NR⁴-, bedeutet und
      **im Fall von R" gleich Rest -CO-NH-Z-NCO** die Bedeutung von Rest
      OCN-Z-NH-CO-ND-Y-Si(OR¹)ₒR₂₋ₒ-(O-SiR_{q}R⁵_{2-q})ₙ-O-Si(OR¹)ₒR₂₋ₒ-Y- ND-, OCN-Z-NH-CO-NR⁴-G-NR⁴- oder OCN-Z-NH-CO-E-X-E-, bevor- zugt OCN-Z-NH-CO-ND-Y-Si(OR¹)ₒR₂₋ₒ-(O-SiR_{q}R⁵_{2-q})ₙ-O-Si(OR¹)ₒR₂₋ₒ -Y-ND- oder OCN-Z-NH-CO-NR⁴-G-NR⁴-, hat,
      - **n**: gleich oder verschieden sein kann und eine ganze Zahl von 1 bis 4000 ist,
      - **o**: gleich oder verschieden sein kann und 0, 1 oder 2, bevor- zugt 0, ist,
      - **q**: 0 oder 1 ist,
      - **a**: eine ganze Zahl von mindestens 1 ist,
      - **b**: 0 oder eine ganze Zahl von mindestens 1 ist
      - **c**: 0 oder eine ganze Zahl von mindestens 1 ist,
   mit der Maßgabe, dass im Molekül mindestens ein Rest R⁵ vorhanden ist sowie die einzelnen Blöcke (A), (B) und (C) im Polymer statistisch verteilt sein können, gegebenenfalls
(ii) mindestens einen Vernetzer,
(iii) einen Photopolymerisationsinitiator,
   gegebenenfalls
(iv) Füllstoff, gegebenenfalls
(v) Haftvermittler,
   gegebenenfalls
(vi) weitere Stoffe ausgewählt aus der Gruppe enthaltend Weichmacher, Stabilisatoren, Antioxidantien, Flammschutzmittel, Lichtschutzmittel und Pigmente,
   gegebenenfalls
(vii) vernetzbare Polymere, die unterschiedlich sind zu (i), und gegebenenfalls
(viii) Polymerisationsinhibitoren.

Im Rahmen der vorliegenden Erfindung sollen von dem Begriff Organopolysiloxane sowohl polymere, oligomere wie auch dimere Siloxane mitumfasst werden.

Beispiele für zweiwertige Reste Z sind Alkylenreste, wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest, Decylenreste, wie der n-Decylenrest, Dodecylenreste, wie der n-Dodecylenrest; Alkenylenreste, wie der Vinylen- und der Allylenrest; Cycloalkylenreste, wie Cyclopentylen-, Cyclohexylen-, Cycloheptylenreste und Methylcyclohexylenreste; Arylenreste, wie der Phenylen- und der Naphthylenrest; Alkarylenreste, wie o-, m-, p-Tolylenreste, Xylylenreste und Ethylphenylenreste; Aralkylenreste, wie der Benzylenrest, der α- und der β-Phenylethylenrest sowie der 4,4'-Methylendiphenylenrest.

Bevorzugt handelt es sich bei Rest Z um Alkylengruppen mit 1 bis 24 Kohlenstoffatomen, besonders bevorzugt um Hexylen-, 4,4'-Methylen-biscyclohexylen- und 3-Methylen-3,5,5-trimethylcyclohexylenrest.

Beispiele für die zweiwertigen Reste G sind die für Z aufgeführten Beispiele. Bevorzugt handelt es sich bei Rest G um Alkylenreste mit 1 bis 6 Kohlenstoffatomen, Arylenresten wie der o-, m-, oder p-Phenylenrest und Aralkylenreste wie der Phenethylenrest, wobei Rest -CH₂CH₂- besonders bevorzugt ist.

Beispiele für Z' sind alle für Z angegebenen Beispiele. Bevorzugt handelt es sich bei Rest Z' um Alkylengruppen mit 1 bis 24 Kohlenstoffatomen, besonders bevorzugt um Alkylengruppen mit 1 oder 3 Kohlenstoffatomen.

Beispiele für Y sind alle für Z angegebenen Beispiele. Bei Rest Y handelt es sich bevorzugt um Alkylenreste mit 1 bis 30 Kohlenstoffatomen, in dem einander nicht benachbarte Methyleneinheiten durch Gruppen -O- ersetzt sein können, oder um Arylenreste mit 6 bis 22 Kohlenstoffatomen. Besonders bevorzugt handelt es sich bei Rest Y um Alkylengruppen mit 1 bis 3 Kohlenstoffatomen, insbesondere um Alkylengruppen mit 1 oder 3 Kohlenstoffatomen.

Beispiele für Rest X sind der Butylenrest, Ethylenrest, Hexylenrest, -(CH₂)₃-(O-CH(CH₃)-CH₂)₂₋₃₀₀₀-O-(CH₂)₃-, -CH(CH₃)-CH₂-(O-CH(CH₃)-CH₂)₂₋₃₀₀₀-, -(CH₂)₃-(O-CH₂-CH₂)₂₋₃₀₀-O-(CH₂)₃- und -CH₂-CH₂-(OCH₂-CH₂)₂₋₃₀₀-.

Bei Rest X handelt es sich bevorzugt um Polyetherreste, besonders bevorzugt um Polypropylenglykolreste, insbesondere um solche mit 2 bis 600 Kohlenstoffatomen.

Beispiele für Rest R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Bevorzugt handelt es sich bei Rest R um einen Kohlenwasserstoffrest mit 1 bis 6 Kohlenstoffatomen, besonders bevorzugt um einen Alkylrest mit 1 bis 4 Kohlenstoffatomen, insbesondere um den Methylrest.

Beispiele für Rest R⁵ sind Vinyl-, Allyl-, 5-Hexenyl-, Cyclohexenyl-, 1-Propenyl-, 3-Butenyl- und 4-Pentenylrest, 1,3-Butadienyl-, 4-Styryl-, Acryloxymethyl-, Acryloxypropyl-, Methacryloxymethyl- und Methacryloxypropylrest.

Bevorzugt handelt es sich bei Rest R⁵ um gegebenenfalls durch Fluor-, Chlor- oder Sauerstoffgruppen (z.B. =C=O) substituierte, gegebenenfalls durch Sauerstoffatome unterbrochene Kohlenwasserstoffreste mit 2 bis 20 Kohlenstoffatomen, besonders bevorzugt um den Vinyl- und Allylrest, insbesondere um den Vinylrest.

Beispiele für Rest R¹ sind die für Rest R angegebenen Beispiele sowie Alkoxyalkylreste.

Bevorzugt handelt es sich bei Rest R¹ um lineare oder verzweigte Alkylreste mit 1 bis 12 Kohlenstoffatomen und Alkoxyalkylreste wie der 2-Methoxyethyl-, 2-Ethoxyethyl- und 2-(2'Methoxyethyl)ethylrest, besonders bevorzugt um Alkylreste mit 1 bis 12 Kohlenstoffatomen, insbesondere um den Methyl- und Ethylrest.

Beispiele für Rest R⁴ sind die für R angegebenen Reste, Wasserstoffatom sowie die Reste -(CH₂)₄Si(OCH₃)₃, -(CH₂CH(CH₃)CH₂)Si(OCH₃)₃, -(CH₂CH(CH₃)CH₂)Si (OCH₂CH₃)₃, -(CH₂CH(CH₃)CH₂)SiCH₃(OCH₃)₂, -(CH₂CH(CH₃)CH₂)SiCH₃(OCH₂CH₃)₃, -(CH₂)₃Si(OCH₃)₃, -(CH₂)₃Si(OCH₂CH₃)₃, -(CH₂)₃SiCH₃(OCH₃)₂, -(CH₂)₃SiCH₃(OCH₂CH₃)₂, -CH₂Si(OCH₃)₃, -CH₂Si(OCH₂CH₃)₃, -CH₂SiCH₃(OCH₃)₂, -CH₂SiCH₃(OCH₃)₂, -(CH₂)₃SiCH₃(OCH₂CH₂OCH₃)₂ und -C₆Hs₄-(CH₂)₂SiCH₃(OCH₂CH₃)₂.

Bevorzugt handelt es sich bei Rest R⁴ um Wasserstoffatom und die zuvor angegebenen silylsubstituierten Alkylreste, besonders bevorzugt um Wasserstoffatom und die Reste -(CH₂)₃Si(OCH₃)₃, -(CH₂)₃Si(OCH₂CH₃)₃, -(CH₂)₃SiCH₃(OCH₃)₂, -(CH₂)₃SiCH₃(OCH₂CH₃)₂, -CH₂Si(OCH₃)₃, -CH₂Si(OCH₂CH₃)₃, -CH₂SiCH₃(OCH₃)₂ sowie -CH₂SiCH₃(OCH₃)₂.

Beispiele für Kohlenwasserstoffreste D sind die für R oben angegebenen Reste.

Bei Rest D handelt es sich bevorzugt um einen Alkylrest oder Wasserstoffatom, besonders bevorzugt um einen Alkylrest mit 1 bis 12 Kohlenstoffatomen oder Wasserstoffatom, insbesondere um Wasserstoffatom.

Bei Rest E handelt es sich bevorzugt um Sauerstoffatom.

Bevorzugt hat a die Bedeutung einer ganzen Zahl von 1 bis 1000, besonders bevorzugt von 5 bis 1000, insbesondere 5 bis 100.

Bevorzugt hat b die Bedeutung von 0 oder einer ganzen Zahl von 1 bis 1000, besonders bevorzugt von 0 oder einer ganzen Zahl von 5 bis 1000, insbesondere 0.

Bevorzugt hat c die Bedeutung von 0 oder einer ganzen Zahl von 1 bis 100, besonders bevorzugt von 0 oder einer ganzen Zahl von 1 bis 10, insbesondere 0.

Beispiele für Reste R' sind, für den Fall dass R" gleich Wasserstoffatom ist, Reste, die sich von den nicht umgesetzten Endgruppen aus den eingesetzten Edukten ergeben, wie H₂N-(CH₂)₃-Si(CH₃)₂-(O-Si(CH₃)₂)₄₀-O-Si(CH₃)₂-(CH₂)₃-NH-,

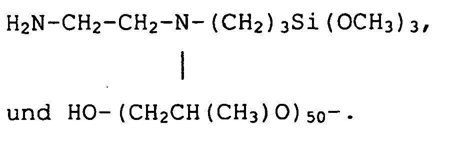

Beispiele für Reste R' sind, für den Fall dass R" gleich -CO-NH-Z-NCO ist, Reste, die sich von den nicht umgesetzten Endgruppen aus den eingesetzten Edukten ergeben, wie OCN-(CH₂)₆-NH-CO-HN-(CH₂)₃-Si(CH₃)₂-[(O-Si(CH₃)₂)₃₈(O-Si(CH₃)(CH=CH₂)]-O-Si(CH₃)₂-(CH₂)₃-NH-,

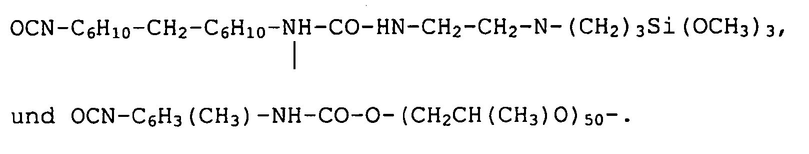

Beispiele für Reste R" sind Wasserstoffatom, -CO-NH-(CH₂)₆-NCO, -CO-NH-C₆H₁₀-CH₂-C₆H₁₀-NCO und -CO-NH-C₆H₃(CH₃)-NCO.

Bevorzugt ist n eine ganze Zahl von 10 bis 4000, besonders bevorzugt von 30 bis 1000.

Index p ist bevorzugt 0.

Erfindungsgemäße Copolymere enthaltend Einheiten (C) können ein härteres Material ergeben im Vergleich zu erfindungsgemäßen Copolymeren, die keine Einheit (C) enthalten, da in ihnen mehr Wasserstoffbrücken vorliegen. Wird der Anteil an Komponente (C) zu hoch, treten Entmischungserscheinungen zwischen den organischen und Polysiloxan-Bestandteilen auf, so dass die Transparenz der erfindungsgemäßen Copolymere reduziert wird und die Copolymere trüb werden. Bevorzugt sind Polymere der Formel (I) mit c gleich Null, da somit ausschließlich Siloxanketten vorliegen und dadurch die Polymere Vorteile, wie beispielsweise hohe Transparenz bei gleichzeitig niedrigen Oberflächenenergien, aufweisen. Bevorzugt ist auch b gleich 0.

Beispiele für Copolymere der Formel (I) sind
H[NH(CH₂)₃SiMe₂O(SiMe₂O)₃₃(SiMeViO)₂SiMe₂(CH₂)₃-NH-CO-NH-(CH₂)₆-NH-CO-NH-CH₂CH₂-NH-CO-NH-(CH₂)₆-NH-CO]₁₀-NH(CH₂)₃SiMe₂O(SiMe₂O)₃₃-(SiMeViO)₂SiMe₂(CH₂)₃-NH₂,
H[NH(CH₂)₃Si(OMe)₂O(SiMe₂O)₃₃(SiMeViO)₂Si(OMe)₂(CH₂)₃-NH-CO-NH-(CH₂)₆-NH-CO-NH-CH₂CH₂-NH-CO-NH-(CH₂)₆-NH-CO]₁₀-NH(CH₂)₃SiMe₂O(SiMe₂O)₃₃(SiMeViO)₂SiMe₂(CH₂)₃-NH₂,
H[[NH(CH₂)₃SiMe₂O(SiMe₂O)₃₃(SiMeViO)₂SiMe₂(CH₂)₃-NH-CO-NH-(CH₂)₆-NH-CO-]₅-[NH-CH₂CH₂-NH-CO-NH-(CH₂)₆-NH-CO]₅]₁₀-NH-CH₂CH₂-NH₂,
H[NH(CH₂)₃SiMe₂O(SiMe₂O)₃₃(SiMeViO)₂SiMe₂(CH₂)₃-NH-CO-NH-(CH₂)₆-NH-CO-NH-CH₂CH₂-NH-CO-NH-(CH₂)₆-NH-CO-O-(CH₂CH₂O)₅-CO-NH-(CH₂)₆-NH-CO]₁₀-NH(CH₂)₃SiMe₂O(SiMe₂O)₃₃(SiMeViO)₂SiMe₂(CH₂)₃-NH₂,
H[NH-CH₂-SiMe₂O(SiMe₂O)₃₃(SiMeViO)₂SiMe₂-CH₂-NH-CO-NH-(CH₂)₆-NH-CO-NH-CH₂CH₂-NH-CO-NH-(CH₂)₆-NH-CO-NH-(CH₂CH₂O)₅-CH₂CH₂-NH-CO-NH-(CH₂)₆-NH-CO]₁₀-CH₂-SiMe₂O(SiMe₂O)₃₃(SiMeViO)₂SiMe₂-CH₂-NH₂,
H[NH(CH₂)₃SiMe₂O(SiMe₂O)₃₃(SiMeViO)₂SiMe₂(CH₂)₃-NH-CO-NH-C₁₀H₂₀-NH-CO-NH-CH₂CH₂-NH-CO-NH-C₁₀H₂₀-NH-CO]₁₀-NH(CH₂)₃SiMe₂O(SiMe₂O)₃₃(SiMeViO)₂SiMe₂(CH₂)₃-NH₂,
OCN-C₇H₆-NH-CO-[NH(CH₂)₃SiMe₂O(SiMe₂O)₃₃(SiMeViO)₂SiMe₂(CH₂)₃-NH-CO-NH-C₇H₆-NH-CO-NH-CH₂CH₂-NH-CO-NH-C₇H₆-NH-CO]₁₀-NH(CH₂)₃SiMe₂O(SiMe₂O)₃₃(SiMeViO)₂SiMe₂(CH₂)₃-NH-CO-NH-C₇H₆-NCO und
OCN-C₇H₆-NH-CO-[NH(CH₂)₃SiMe₂O(SiMe₂O)₃₃(SiMeViO)₂SiMe₂(CH₂)₃-NH-CO-NH-C₇H₆-NH-CO-NH-CH₂CH₂-NH-CO-NH-C₇H₆-NH-CO]₁₀-NH-CH₂CH₂-NH-CO-NH-C₇H₆-NCO.
H[NH(CH₂)₃SiMe₂O(SiMe₂O)₃₃(SiMeAll-O)₂SiMe₂(CH₂)₃-NH-CO-NH-(CH₂)₆-NH-CO-NH-CH₂CH₂-NH-CO-NH-(CH₂)₆-NH-CO]₁₀-NH(CH₂)₃SiMe₂O(SiMe₂O)₃₃(SiMeAll-O)₂SiMe₂(CH₂)₃-NH₂,
H[NH(CH₂)₃Si(OMe)₂O(SiMe₂O)₃₃(SiMeAll-O)₂Si(OMe)₂(CH₂)₃-NH-CO-NH-(CH₂)₆-NH-CO-NH-CH₂CH₂-NH-CO-NH-(CH₂)₆-NH-CO]₁₀-NH(CH₂)₃SiMe₂O(SiMe₂O)₃₃(SiMeAll-O)₂SiMe₂(CH₂)₃-NH₂,
H[[NH(CH₂)₃SiMe₂O(SiMe₂O)₃₃(SiMeAll-O)₂SiMe₂(CH₂)₃-NH-CO-NH-(CH₂)₆-NH-CO-]₅-[NH-CH₂CH₂-NH-CO-NH-(CH₂)₆-NH-CO] ₅]₁₀-NH-CH₂CH₂-NH₂,
H[NH(CH₂)₃SiMe₂O(SiMe₂O)₃₃(SiMeAll-O)₂SiMe₂(CH₂)₃-NH-CO-NH-(CH₂)₆-NH-CO-NH-CH₂CH₂-NH-CO-NH-(CH₂)₆-NH-CO-O-(CH₂CH₂O)₅-CO-NH-(CH₂)₆-NH-CO]₁₀-NH(CH₂)₃SiMe₂O(SiMe₂O)₃₃(SiMeAll-O)₂SiMe₂(CH₂)₃-NH₂,
H[NH-CH₂-SiMe₂O(SiMe₂O)₃₃(SiMeAll-O)₂SiMe₂-CH₂-NH-CO-NH-(CH₂)₆-NH-CO-NH-CH₂CH₂-NH-CO-NH-(CH₂)₆-NH-CO-NH-(CH₂CH₂O)₅-CH₂CH₂-NH-CO-NH-(CH₂)₆-NH-CO]₁₀-CH₂-SiMe₂O(SiMe₂O)₃₃(SiMeAll-O)₂SiMe₂-CH₂-NH₂,
H[NH(CH₂)₃SiMe₂O(SiMe₂O)₃₃(SiMeAll-O)₂SiMe₂(CH₂)₃-NH-CO-NH-C₁₀H₂₀-NH-CO-NH-CH₂CH₂-NH-CO-NH-C₁₀H₂₀-NH-CO]₁₀-NH(CH₂)₃SiMe₂O(SiMe₂O)₃₃(SiMeAll-O)₂SiMe₂(CH₂)₃-NH₂,
OCN-C₇H₆-NH-CO-[NH(CH₂)₃SiMe₂O(SiMe₂O)₃₃(SiMeAll-O)₂SiMe₂(CH)₃-NH-CO-NH-C₇H₆-NH-CO-NH-CH₂CH₂-NH-CO-NH-C₇H₆-NH-CO]₁₀-NH(CH₂)₃SiMe₂O(SiMe₂O)₃₃(SiMeAll-O)₂SiMe₂(CH)₃-NH-CO-NH-C₇H₆-NCO und
OCN-C₇H₆-NH-CO-[NH(CH₂)₃SiMe₂O(SiMe₂O)₃₃(SiMeAll-O)₂SiMe₂(CH₂)₃-NH-CO-NH-C₇H₆-NH-CO-NH-CH₂CH₂-NH-CO-NH-C₇H₆-NH-CO]₁₀-NH-CH₂CH₂-NH-CO-NH-C₇H₆-NCO,
wobei Me Methylrest, Vi Vinylrest und All Allylrest -CH₂-CH=CH₂ bedeutet.

Bei bevorzugt 1 bis 20 %, besonders bevorzugt bei 2 bis 10 %, aller SiC-gebundenen Reste im erfindungsgemäßen Polymer der Formel (I) handelt es sich um Reste R⁵.

Die erfindungsgemäßen Copolymere der Formel (I) haben einen Gehalt an Einheiten A der Formel (II) von bevorzugt größer 70 Gew.-%, besonders bevorzugt größer 80 Gew.-%, jeweils bezogen auf das Gesamtgewicht des Copolymers.

Die erfindungsgemäßen Copolymere der Formel (I) sind bei Raumtemperatur und dem Druck der umgebenden Atmosphäre, also etwa 900 bis 1100 hPa, bevorzugt gummielastische Festkörper mit Zugfestigkeiten zwischen vorzugsweise etwa 0,5 und 20 MPa sowie Reißdehnungen zwischen bevorzugt etwa 50 bis 1000%. Sie erweichen bei einem Druck von 900 bis 1100 hPa bei Temperaturen zwischen bevorzugt 60 und 200°C und verlieren dabei allmählich ihre gummielastischen Eigenschaften.

Durch Einwirkung von Strahlung können nun die vernetzbaren Reste R⁵ untereinander oder mit gegebenenfalls weiteren vernetzbaren alipahtisch ungesättigten Gruppen polymerisieren. Zusätzlich können, falls -Reste OR¹ vorhanden sind, diese unter Bildung von Siloxanbindungen kondensieren, wobei im Fall von R¹ verschieden Wasserstoffatom eine Hydrolyserektion zu OH-Gruppen z.B. durch Einwirkung von Feuchtigkeit vorangehen kann.

Diese so vernetzten erfindungsgemäßen Polymere der Formel (I) haben gegenüber dem Ausgangspolymer vor der Vernetzung bevorzugt einen deutlich zu höheren Temperaturen verschobenen Erweichungspunkt. Damit eröffnet sich die Möglichkeit, Polymere herzustellen, die bei relativ niedrigen Temperaturen verarbeitet werden können, dann aber beim Gebrauch dennoch höheren Temperaturen ausgesetzt werden können.

Die erfindungsgemäßen Copolymere haben weiterhin den Vorteil, dass sie sehr gute mechanische Eigenschaften aufweisen ohne dass Füllstoffe zugegeben werden müssen.

Weiterhin zeichnen sich die erfindungsgemäßen Copolymere durch hervorragende physikalische Eigenschaften aus, wie sie von Polyorganosiloxanen bekannt sind, wie beispielsweise niedrige. Glasübergangstemperaturen, Transparenz, geringe Oberflächenenergien, niedrige Hydrophobizität, gute dielektrische Eigenschaften und hohe Permeabilität gegenüber Gasen.

Weitere Vorteile der erfindungsgemäßen Copolymere sind die hohe thermische und oxidative Beständigkeit, gute Beständigkeiten gegenüber Quellung und Zersetzung durch vor allem polare organische Lösemitteln.

Je nach der Anzahl der Einheiten (C) in den erfindungsgemäßen Copolymeren können die Eigenschaften, wie beispielsweise Schälund Ablösefestigkeit, Bedruckbarkeit, Zug- und Durchreißfestigkeit oder Wasserdampfdurchlässigkeit, gezielt eingestellt werden.

Die Herstellung der erfindungsgemäßen Copolymere kann analog beliebiger Verfahren, die dem Fachmann bereits bekannt sind und beispielsweise zur Synthese von (Prä)polymeren für Polyurethane eingesetzt werden, erfolgen.

Beschrieben in der vorliegenden Erfindung ist ein Verfahren zur Herstellung der erfindungsgemäßen Copolymere der Formel (I) durch Umsetzung von
a) mindestens einem Polymer der Formel

   **H-ND-Y-Si(OR¹)ₒR₂₋ₒ-(O-SiR_{q}R⁵_{2-q})ₙ-O-Si(OR¹)ₒR₂₋ₒ-Y-ND-H** **(V),**
b) mindestens einem Diisocyanat der Formel

   **OCN-Z-NCO** **(VII)**

   oder blockierten Diisocyanaten (thermisch instabilen Umsetzungsprodukten von Isocyanaten mit zum Beispiel Phenolen, Ketoximen, Malonestern, stickstoffhaltigen Heterocyclen),
c) gegebenenfalls einer Verbindung der Formel

   **H-NR⁴-G-NR⁴-H** **(VI)**
d) gegebenenfalls Verbindungen der Formel

   **H-E-X-E-H** **(VIII),**
e) gegebenenfalls einem Katalysator und
f) gegebenenfalls mindestens einem Lösemittel,
   wobei **X, Y, Z, D, E, G, R, R¹, R⁴, R⁵** und **o** und **q** die oben genannte Bedeutung aufweisen.

Beispiele der erfindungsgemäß eingesetzten Verbindungen der Formel **(V)** sind α,ω-aminopropyldimethylsilylterminierte Poly(dimethyl-co-methylvinyl)siloxane, α,ω-aminopropyldimethoxysilylterminierte Poly(dimethyl-co-methylvinyl)siloxane, α,ω-aminomethyldimethylsilylterminierte Poly(dimethyl-co-methylvinyl)siloxane und α,ω-aminomethyldimethoxysilylterminierte Poly(dimethylco-methylvinyl)siloxane.

Bevorzugte Verbindungen der Formel **(VI),** die im erfindungsgemäßen Verfahren gegebenenfalls eingesetzt werden, sind 3-(2-Aminoethyl)aminopropyltrimethoxysilan, 3-(2-Aminoethyl)aminopropyltriethoxysilan, 3-(2-Aminoethyl)aminopropylmethyldimethoxysilan, 3-(2-Aminoethyl)aminopropyldimethylmethoxysilan 3-(2-Aminoethyl)aminopropylmethyldiethoxysilan, N,N'-Bis-(3-trimethoxysilylpropyl)-ethylendiamin, N,N'-Bis-(3-triethoxysilylpropyl)ethylendiamin, N,N'-Bis-(3-dimethoxymethylsilylpropyl)-ethylendiamin und N,N'-Bis-(3-diethoxymethylsilylpropyl)ethylendiamin, N-Trimethoxysilylmethylethylendiamin, N-Triethoxysilylmethylethylendiamin, N-Dimethoxymethylsilylmethylethylendiamin, N-Diethoxymethylsilylmethylethylendiamin und N-Methoxydimethylsilylmethylethylendiamin.

Beispiele der erfindungsgemäß eingesetzten Isocyanate der Formel **(VII)** sind Hexylendiisocyanat, 4,4'-Methylendicyclohexylendiisocyanat, 4,4'-Methylendiphenylendiisocyanat, 1,3-Diazetidine-2,4-dion-bis(4,4'-methylendicyclohexyl)diisocyanat, 1,3-Diazetidine-2,4-dion-bis(4,4'-methylendiphenyl)diisocyanat, Tetramethylenxylylendiisocyanat und Isophorondiisocyanat, wobei Hexylendiisocyanat, 4,4'-Methylendicyclohexylendiisocyanat, 4,4'-Methylendiphenylendiisocyanat, Tetramethylenxylylendiisocyanat und Isophorondiisocyanat bevorzugt sowie Hexylendiisocyanat, 4,4'-Methylendicyclohexylendiisocyanat und Isophorondiisocyanat besonders bevorzugt sind.

Beispiele der erfindungsgemäß gegebenenfalls eingesetzten Verbindungen der Formel **(VIII)** sind aus der Polyurethanchemie bekannte Verbindungen wie Diole wie z.B. Ethylenglycol, Polyethylenglycole, Polypropylenglycole, Polyesterpolyole, Diamine wie z.B. Ethylendiamin, 5-Amino-3-(aminomethyl)-1,3,3-trimethylcyclohexan), Bis(4-amino-3-methylphenyl)methane, Isomerengemisch des Diaminodiethylmethylbenzols, Bis(4-amino-3-chlorphenyl)methan, 2-Methylpropyl-4-chlor-3,5-diaminobenzoat, und aminoterminierte Polyether (ATPE).

Die Stöchiometrie der Reaktanden zur Herstellung der erfindungsgemäßen Copolymere wird vorzugsweise derart gewählt, dass das molare Verhältnis der Isocyanatgruppen aus den Verbindungen der Formel (VII) zur Summe der mit den Isocyanatgruppen reaktiven EH- und NH-Gruppen aus den Verbindungen der Formeln (V), (VI) und (VIII) im Bereich von bevorzugt 0,7 bis 1,3, besonders bevorzugt 0,95 bis 1,05, insbesondere bei 1, liegt. Bei einem Verhältnis der Isocyanatgruppen zu den reaktiven Gruppen von größer 1, also einem Überschuss an Isocyanatgruppen, ergeben sich erfindungsgemäße Polymere der Formel (I) mit R" = NH-CO-Z-NCO und den sich daraus ergebenden Resten R' wie oben definiert am anderen Ende der Polymerketten. Bei einem Verhältnis kleiner 1, also einem Unterschuss an Isocyanatgruppen, ergeben sich erfindungsgemäße Polymere der Formel (I) mit R"=H und den sich daraus ergebenden Resten R' wie oben definiert am anderen Ende der Polymerketten.

Beispiele für die gegebenenfalls eingesetzten Katalysatoren sind alle bisher bekannten Katalysatoren, welche die Addition der Isocyanatgruppen der Verbindungen der allgemeinen Formeln (VII) an die aktiven Gruppen der Polymere gemäß den Formeln (V), (VI) und (VIII) fördern, wie etwa Diorganozinnverbindungen und Bismutverbindungen.

Besonders bevorzugt werden bei dem erfindungsgemäßen Verfahren keine Katalysatoren eingesetzt.

Falls im erfindungsgemäßen Verfahren Katalysatoren eingesetzt werden, handelt es sich um Mengen von vorzugsweise 0,0001 bis 1 Gewichtsteile, besonders bevorzugt 0,001 bis 0,1 Gewichtsteile, jeweils bezogen auf 100 Gewichtsteile der Gesamtmischung.

Beispiele für die im erfindungsgemäßen Verfahren gegebenenfalls eingesetzten Lösungsmittel sind Tetrahydrofuran, Dimethylformamid, Isopropanol und Methylethylketon.

Besonders bevorzugt werden bei dem erfindungsgemäßen Verfahren keine Lösungsmittel eingesetzt.

Falls im erfindungsgemäßen Verfahren Lösungsmittel eingesetzt wird, handelt es sich um Mengen von vorzugsweise 10 bis 200 Gewichtsteile, besonders bevorzugt 10 bis 100 Gewichtsteile, jeweils bezogen auf 100 Gewichtsteile Gesamtmischung.

Die erfindungsgemäße Umsetzung kann in Lösung oder in Substanz erfolgen, wobei eine Umsetzung in Substanz bevorzugt ist.

Falls die erfindungsgemäße Umsetzung in Lösung erfolgt, sind Temperaturen von 0 bis 100°C bevorzugt und von 20 bis 80°C besonders bevorzugt.

Falls die erfindungsgemäße Umsetzung in Substanz erfolgt, sind Temperaturen oberhalb des Erweichungspunkts des hergestellten Copolymers der Formel (I) bevorzugt.

Das erfindungsgemäße Verfahren wird im Falle einer diskontinuierlichen Arbeitsweise bevorzugt bei einem Druck der umgebenden Atmosphäre, also zwischen 900 und 1100 hPa, durchgeführt. Bei kontinuierlicher Herstellung, z.B. in einem Doppelschneckenextruder, wird bei einem Druck von bevorzugt bis zu 15 MPa in einigen Abschnitten des Extruders und zur Entgasung bei Drücken von bevorzugt 0,1 bis 1100 hPa gearbeitet.

Das erfindungsgemäße Verfahren wird bevorzugt unter Ausschluss von Feuchtigkeit und Strahlung durchgeführt, es ist aber auch möglich bei Anwesenheit von Wasser und Strahlung zu arbeiten.

Die Herstellung der erfindungsgemäßen Copolymere gemäß der allgemeinen Formel (I) kann mit Methoden erfolgen, die dem Fachmann bekannt sind, wie beispielsweise mittels Extrudern, Knetern, Walzenstühlen, dynamischen oder statischen Mischern. Die Herstellung der erfindungsgemäßen Copolymere kann kontinuierlich oder diskontinuierlich erfolgen. Bevorzugt erfolgt die Herstellung kontinuierlich.

Die erfindungsgemäß hergestellten Siloxan-Copolymere können nun nach beliebigen, bisher bekannten Verfahren von gegebenenfalls noch vorhandenen Edukten bzw. gegebenenfalls eingesetzten Lösungsmitteln bzw. Katalysatoren befreit werden, wie z.B. durch Destillation oder Extraktion.

Die im erfindungsgemäßen Verfahren eingesetzten Komponenten sind handelsübliche Produkte bzw. können nach in der Chemie gängigen Methoden hergestellt werden.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das erfindungsgemäße Verfahren hat den Vorteil, dass es einfach in der Durchführung ist und viele mögliche Copolymere mit großer Variabilität hergestellt werden können.

Des Weiteren hat das erfindungsgemäße Verfahren den Vorteil, dass Copolymere wohldefiniert hergestellt werden können.

Die erfindungsgemäßen bzw. erfindungsgemäß hergestellten Copolymere der Formel (I) können mit den üblichen Verarbeitungsmethoden für strahlungsvernetzbare und gegebenenfalls feuchtigkeitsvernetzbare Polymere bzw. thermoplastische Elastomere hergestellt und verarbeitet werden, beispielsweise mittels Extrusion, Spritzguss, Blasverformung, Vakuumtiefziehen. Eine Verarbeitung als Lösung oder Emulsion bzw. Suspension ist ebenfalls möglich.

Bevorzugte Anwendungen der erfindungsgemäßen bzw. erfindungsgemäß hergestellten Copolymere der Formel (I) sind Verwendungen als Bestandteil in Kleb- und Dichtstoffen, als Basisstoff für thermoplastische Elastomere wie beispielsweise Kabelumhüllungen, Schläuche, Dichtungen, Tastaturmatten, für Membranen, wie selektiv gasdurchlässige Membranen, als Zusatzstoffe in Polymerblends, oder für Beschichtungsanwendungen beispielsweise in Antihaftbeschichtungen, gewebeverträglichen Überzügen, flammgehemmten Überzügen und als biokompatible Materialien. Weitere Anwendungsmöglichkeiten sind Dicht- und Klebstoffe wie zum Beispiel Schmelzkleber, als Lösung zu applizierende Klebstoffe, Primer zur Verbesserung der Haftung von Dicht- und Klebstoffen auf verschiedenen Untergründen, Additive für die Polymerverarbeitung, anti-fouling Überzüge, Kosmetika, Körperpflegemittel, Lackadditive, Hilfsstoff in Waschmitteln und Textilbearbeitung, zum Modifizieren von Harzen oder zur Bitumenmodifizierung.

Der Einsatz der erfindungsgemäßen bzw. erfindungsgemäß hergestellten Copolymere ist in vielen Anwendungen denkbar, wie beispielsweise in Dichtmassen, Klebstoffen, als Material für die Modifizierung von Fasern, als Kunststoffadditiv beispielsweise als Schlagzähverbesserer oder Flammschutzmittel, als Material für Entschäumerformulierungen, als Hochleistungspolymer (Thermoplast, thermoplastisches Elastomer, Elastomer), als Verpackungsmaterial für elektronische Bauteile, in Isolations- oder Abschirmungsmaterialien, in Kabelummantelungen, in Antifoulingmaterialien, als Additiv für Putz-, Reinigungs- oder Pflegemittel, als Additiv für Körperpflegemittel, als Beschichtungsmaterial für Holz, Papier und Pappe, als Formentrennmittel, als biokompatibles Material in medizinischen Anwendungen wie Kontaktlinsen, als Beschichtungsmaterial für Textilfasern oder textile Gewebe, als Beschichtungsmaterial für Naturstoffe wie z.B. Leder und Pelze, als Material für Membranen und als Material für photoaktive Systeme beispielsweise für lithographische Verfahren, Flexodruckplatten, optische Datensicherung oder optische Datenübertragung.

Weiterhin bevorzugt ist die Verwendung der erfindungsgemäßen Copolymere als Trenn-Beschichtung für Klebebänder und Etiketten, Faserbeschichtung für beispielsweise Textilien, Extrusionshilfsmittel für Thermoplastverarbeitung, medizinische Artikel, wie beispielsweise Katheter, Infusionsbeutel oder -schläuche, Schmelzkleber, PSA-Beschichtungen, überstreichbare und überlackierbare Bauteile für die Automobilindustrie, Additiv für die Polymermodifizierung, wie beispielsweise Weichmacher oder Schlagzähmodifier, Folie für laminiertes Sicherheitsglas oder Fugendichtmasse für die Bauindustrie.

Die erfindungsgemäßen Copolymere können überall dort eingesetzt werden, wo auch bisher Organopolysiloxan-Polyharnstoff-Copolymere eingesetzt wurden.

Insbesondere eignen sich die erfindungsgemäßen hergestellten Copolymere der Formel (I) zur Verwendung in vernetzbaren Zusammensetzungen, wie etwa durch Strahlung vernetzbaren Zusammensetzungen.

Bevorzugt handelt es sich bei den erfindungsgemäßen vernetzbaren Massen um strahlungsvernetzbare Massen.

Bei diesen erfindungsgemäßen vernetzbaren Massen handelt es sich bevorzugt um Einkomponentenmassen. Zur Bereitung dieser Einkomponentenmassen können die jeweils eingesetzten Bestandteile auf beliebige und bisher bekannte Weise miteinander vermischt werden. Dieses Vermischen erfolgt bevorzugt bei Raumtemperatur bzw. bei einer Temperatur, die sich beim Zusammengeben der Bestandteile bei Raumtemperatur ohne zusätzliche Heizung oder Kühlung einstellt, und dem Druck der umgebenden Atmosphäre, also etwa 900 bis 1100 hPa. Falls erwünscht, kann dieses Vermischen aber auch bei höheren oder niedrigen Drücken erfolgen, beispielsweise bei niedrigen Drücken zur Vermeidung von Gaseinschlüssen.

Die Herstellung der erfindungsgemäßen Massen und deren Lagerung erfolgen vorzugsweise unter im Wesentlichen strahlungsfreien, gegebenenfalls wasserfreien Bedingungen, um ein vorzeitiges Reagieren der Massen zu vermeiden.

Als gegebenenfalls eingesetzte Vernetzer (ii) können alle Vernetzer eingesetzt werden, die auch bisher in durch Strahlung vernetzbaren Massen eingesetzt worden sind; diese enthalten bevorzugt eine strahlungshärtbare, aliphatische Kohlenstoff-Kohlenstoff-Mehrfachbindung.

Bevorzugt handelt es sich bei Vernetzer (ii) um Vinyl- und Allylsilane, Olefine, Acrylate und Methacrylate, besonders bevorzugt um Acrylate und Methacrylate, insbesondere um mono- und difunktionelle Acrylate und Methacrylate.

Beispiele für gegebenenfalls eingesetzten Vernetzer (ii) sind monofunktionelle Oligo(ether) und monomere Acrylate und Methacrylate, wie 2-(2-Ethoxyethoxy) Ethylacrylat, 2-Phenoxyethylacrylat, Caprolactonacrylat, cyclisches Trimethylopropanformalacrylat, ethoxyliertes Nonylphenolacrylat, Isobornylacrylat, Isodecylacrylat, Laurylacrylat, Octyldecylacrylat, Stearylacrylat, Tetrahydrofurfurylacrylat, Tridecylacrylat, 2-Phenoxyethylmethacrylat, ethoxyliertes Hydroxyethylmethacrylat, Isobornylmethacrylat, Laurylmethacrylat, Methoxypolyethylenglycol(350)monomethacrylat, Methoxypolyethylenglycol(550)monomethacrylat, Polypropylenglycolmonomethacrylat, Stearylmethacrylat, Tetrahydrofurfurylmethacrylat;
Difunktionelle Oligo(ether) und monomere Acrylate und Methacrylate, wie 1,6-Hexandioldiacrylat, alkoxylierte Diacrylate, alkoxylierte Hexandioldiacrylate, Diethylenglycoldiacrylat, Dipropylenglycoldiacrylat, Esterdioldiacrylat, ethoxylierte Bisphenol-A-Diacrylate, Polyethylenglycol(200)diacrylat, Polyethylenglycol(400)diacrylat, Polyethylenglycol(600)diacrylat, propoxyliertes Neopentyl Glycoldiacrylat, Tetraethylenglycoldiacrylat, Tricyclodecandimethanoldiacrylat, Triethylene Glycoldiacrylat, Tripropylenglycoldiacrylat, 1,3-Butylenglycoldimethacrylat, 1,4-Butanedioldimethacrylat, 1,6-Hexandioldimethacrylat, Diethylenglycoldimethacrylat, ethoxylierte Bisphenol-A-Dimethacrylate, Ethylenglycoldimethacrylat, Polyethylenglycol(200)dimethacrylat, Polyethylenglycol(400)dimethacrylat, Polyethylenglycol(600)dimethacrylat, Tetraethylenglycoldimethacrylat, Triethylenglycoldimethacrylat;
Tri- & höher funktionelle Oligo(ether) und monomere Acrylate und Methacrylate, wie Dipentaerythritolpentaacrylat, Ditrimethylolpropantetraacrylat, ethoxylierte Trimethylolpropantriacrylate, Pentaerythritoltetraacrylat, Pentaerythritoltriacrylat, propoxylierte Glyceroltriacrylate, propoxyliertes Trimethylolpropantriacrylat, Trimethylolpropantriacrylat, Tris(2-Hydroxyethyl)isocyanurattriacrylat, Trimethylolpropantrimethacrylat;
Epoxyacrylate, wie Bisphenol-A-Epoxyacrylat, epoxidiertes Sojabohnenölacrylat, Epoxynovolacacrylatoligomer, Fettsäuremodifiziertes Bisphenol-A-Epoxyacrylat;
Aliphatische und aromatische Urethanacrylate und Polyesteracrylate;
Silane mit SiC-gebundenen Vinyl-, Allyl-, Acryloxy-, Methacryloxygruppen sowie deren Teil- und Mischhydrolysate;
Styrol, Isopren, Butadien und Vinylacetat.

Falls die erfindungsgemäßen vernetzbaren Massen Vernetzer (ii) enthalten, handelt es sich um Mengen von vorzugsweise 0,05 bis 70 Gewichtsteilen, besonders bevorzugt 0,2 bis 30 Gewichtteilen, jeweils bezogen auf 100 Gewichtsteile vernetzbare Masse.

Als eingesetzte Photopolymerisationsinitiatoren (iii) können alle dem Fachmann bekannten Initiatoren oder Gemische derselben verwendet werden.

Beispiele für eingesetzte Initiatoren (iii) sind Benzildimethylketal, 2-Hydroxy-2-methyl-phenyl-propan-1-on, 1-Hydroxycyclohexylphenylketon, Isopropylthioxanthon, Bisacylphosphinoxid, 1-[4-(2-hydroxyethoxy)phenyl]-2-hydroxy-2-methylpropan-1-on, Benzoin-n-butylether, polymere Hydroxyketone, wie Oligo(2-hydroxy-2-methyl-1,4-(1-methylvinyl)phenylpropanon), Acenaphthylchinon, α-Aminoacetophenon, Benzanthrachinon, Benzoinmethylether, Benzoinisopropylether, Benzoinisobutylether, Benzophenon, Benzildimethylacetal, Benzil-1-methyl-1-ethylacetal, 2,2-Diethoxy-2-phenylacetophenon, 2,2-Diethoxyacetophenon, 2-Dimethoxybenzoyldiphenylphosphinoxid, 2,2-Dimethoxy-2-phenylacetophenon, wie z.B. Irgacure ® 651 (Ciba-Geigy, CH-Basel), 2-Ethylanthrachinon, Ethyl-2,4,6-trimethylbenzoylphenylphosphinat, Hydroxyacetophenon, 2-Hydroxy-2-methylpropiophenon, 2-Hydroxy-2-methyl-4'-isopropylisopropiophenon, 1-Hydroxycyclohexylphenylketon, 4'-Morpholinodeoxybenzoin, 4-Morpholinobenzophenon, α-Phenylbutyrophenon, 2,4,6-Trimethylbenzoyldiphenylphosphinoxid und 4,4'-Bis(dimethylamino)-benzophenon.

Ein Photopolymerisationsinitiator kann auch in Kombination mit Coinitiatoren, wie Ethylanthrachinon mit 4,4'-Bis(dimethylamino)benzophenon, Benzoinmethylether mit Triphenylphosphin, Benzildimethylketal mit Benzophenone, Diacylphosphineoxide mit tertiären Aminen oder Acyldiarylphosphinoxide mit Benzildimethylacetal, eingesetzt werden.

Die erfindungsgemäßen vernetzbaren Massen enthalten Photopolymerisationsinitiator (iii) in Mengen von vorzugsweise 0,01 bis 5 Gewichtsteilen, bevorzugt 0,05 bis 3 Gewichtteilen, jeweils bezogen auf 100 Gewichtsteile vernetzbare Masse.

Als gegebenenfalls eingesetzte Füllstoffe (iv) können alle Füllstoffe eingesetzt werden, die auch bisher in vernetzbaren Massen eingesetzt worden sind. Beispiele für Füllstoffe sind verstärkende Füllstoffe, also Füllstoffe mit einer BET-Oberfläche von mindestens 30 m²/g, wie beispielsweise Ruße, pyrogen hergestellte Kieselsäure, gefällte Kieselsäure und Silicium-Aluminium-Mischoxide, wobei die genannten Füllstoffe hydrophobiert sein können, sowie nicht verstärkenden Füllstoffe, also Füllstoffe mit einer BET-Oberfläche von weniger als 30 m²/g, wie beispielsweise Pulver aus Quarz, Cristobalit, Diatomeenerde, Calciumsilikat, Zirkoniumsilikat, Montmorillonite, wie Bentonite, Zeolithe einschließlich der Molekularsiebe, wie Natriumaluminiumsilikat, Metalloxide, wie Aluminium- oder Zinkoxid bzw. deren Mischoxide, Metallhydroxide, wie Aluminiumhydroxid, Bariumsulfat, Calciumcarbonat, Gips, Siliciumnitrid, Siliciumcarbid, Bornitrid, Glas-, Kohle- und Kunststoffpulver und Glasund Kunststoffhohlkugeln.

Bevorzugt handelt es sich bei Füllstoff (iv) um pyrogene Kieselsäuren, wobei eine BET-Oberfläche von mindestens 30 m²/g besonders bevorzugt ist.

Falls die erfindungsgemäßen Massen Füllstoffe (iv) enthalten, handelt es sich um Mengen von vorzugsweise 1 bis 50 Gewichtsteilen, bevorzugt 2 bis 30 Gewichtsteilen, jeweils bezogen auf 100 Gewichtsteile vernetzbare Masse.

Als gegebenenfalls eingesetzte Haftvermittler (v) können alle Haftvermittler eingesetzt werden, die auch bisher in durch Strahlung vernetzbaren Massen eingesetzt worden sind. Beispiele für Haftvermittler (v) sind Silane mit SiC-gebundenen Vinyl-, Acryloxy-, Methacryloxygruppen sowie deren Teil- und Mischhydrolysate, Acrylate wie 2-(2-Ethoxyethoxy)ethylacrylat, 2-Phenoxyethylacrylat, cyclisches Trimethylolpropan-formalacrylat, 1,6-Hexandioldiacrylat, Pentaerythritoltetraacrylat, Tetrahydrofurfurylmethacrylat, Methoxy-Polyethylenglycol(550)-monomethacrylat und Stearylmethacrylat.

Falls die erfindungsgemäßen Massen Haftvermittler (v) enthalten, handelt es sich um Mengen von vorzugsweise 0,01 bis 5 Gewichtsteilen, bevorzugt 0,5 bis 4 Gewichtsteilen, jeweils bezogen auf 100 Gewichtsteile vernetzbare Masse.

Beispiele für weitere Stoffe (vi) sind Weichmacher, wie trimethylsilylterminierte Polydimethylsiloxane und Kohlenwasserstoffe mit etwa 16 bis 30 Kohlenstoffatomen, Stabilisatoren, wie 2-Etylhexylphosphat, Octylphosphonsäure, Polyether, Antioxidantien, Flammschutzmittel, wie Phosphorsäureester, Lichtschutzmittel und Pigmente, wie Titandioxid und Eisenoxide.

Bevorzugt handelt es sich bei den gegebenenfalls eingesetzten weiteren Stoffen (vi) um Weichmacher, wie trimethylsilylterminierte Polydimethylsiloxane und Kohlenwasserstoffe mit etwa 16 bis 30 Kohlenstoffatomen, Stabilisatoren, wie 2-Etylhexylphosphat, Octylphosphonsäure, Polyether, Flammschutzmittel, wie Phosphorsäureester und Pigmente, wie Titandioxid und Eisenoxide, wobei Stabilisatoren und Pigmente besonders bevorzugt sind.

Falls Bestandteil (vi) eingesetzt wird, handelt es sich um Mengen von bevorzugt 0,01 bis 30 Gewichtsteilen, besonders bevorzugt 0,05 bis 25 Gewichtsteilen, jeweils bezogen auf 100 Gewichtsteile vernetzbare Masse.

Gegebenenfalls können die erfindungsgemäßen vernetzbaren Massen vernetzbare Polymere (vii), wie Organopolysiloxane mit reaktiven Endgruppen und aliphatische und aromatische Urethanacrylate und Polyesteracrylate, enthalten. Beispiele für solche vernetzbaren Siloxane (vii) sind α,ω-Diacryloxymethylpolydimethylsiloxane, α,ω-Divinylpolydimethylsiloxane und α,ω-methacryloypropylterminierte Polydimethylsiloxane.

Bevorzugt handelt es sich bei der gegebenenfalls in den erfindungsgemäßen vernetzbaren Massen eingesetzten Komponente (vii) um Polydiorganosiloxane mit mindestens einer strahlungsvernetzbaren Gruppe an den Kettenenden, besonders bevorzugt um Polydimethylsiloxane mit mindestens einer Acrylgruppe an den Kettenenden, insbesondere um α,ω-Diacryloxymethylpolydimethylsiloxane und α,ω-methacryloypropylterminierte Polydimethylsiloxane mit einer Viskosität von 100 bis 500 000 mPas.

Bevorzugt enthalten die erfindungsgemäßen vernetzbaren Massen Komponente (vii). Dieser Bestandteil wird bevorzugt zur Einstellung der Verarbeitungseigenschaften, wie beispielsweise der Viskosität, eingesetzt.

Falls Komponente (vii) eingesetzt wird, handelt es sich um Mengen von bevorzugt 1 bis 50 Gewichtsteilen, besonders bevorzugt 2 bis 25 Gewichtsteilen, jeweils bezogen auf 100 Gewichtsteile vernetzbare Masse.

Die erfindungsgemäßen Zusammensetzungen können Polymerisationsinhibitoren (viii) enthalten. Aus Gründen der besseren Handhabung ist es bevorzugt, die erfindungsgemäßen Zusammensetzungen mit geringen Mengen Inhibitoren (viii) zu versetzen, um beispielsweise vorzeitige Vernetzung einer verwendungsfähigen Formulierung während deren Lagerung zu verhindern. Beispiele für gegebenenfalls eingesetzte Inhibitoren sind alle gebräuchlichen auch bisher in radikalisch ablaufenden Prozessen eingesetzten Inhibitoren, wie Hydrochinon, 4-Methoxyphenol, 2,6-Ditert.butyl-4-methylphenol oder Phenothiazin.

Falls Inhibitoren (viii) eingesetzt werden handelt es sich um Mengen von 10 bis 10 000 ppm, besonders bevorzugt 50 bis 1 000 ppm, jeweils bezogen auf 100 Gewichtsteile der vernetzbaren Masse.

Bei den einzelnen Bestandteilen der erfindungsgemäßen vernetzbaren Massen kann es sich jeweils um eine Art eines solchen Bestandteils wie auch um ein Gemisch aus mindestens zwei verschiedenen Arten derartiger Bestandteile handeln.

Insbesondere enthalten die erfindungsgemäßen Massen außer der Komponente (i) und (iii), gegebenenfalls (ii), (iv), (v), (vi), (vii) und (viii) keine weiteren Bestandteile.

Die Herstellung der erfindungsgemäßen vernetzbaren Massen erfolgt mit Methoden, die dem Fachmann bekannt sind, wie beispielsweise mittels Extrudern, Knetern, Walzenstühlen, dynamischen oder statischen Mischern. Die Herstellung der erfindungsgemäßen Massen kann kontinuierlich oder diskontinuierlich erfolgen. Bevorzugt erfolgt die Herstellung kontinuierlich.

Die erfindungsgemäßen Massen können durch Bestrahlen mit Ultraviolettlicht (UV-Licht), Laser oder Sonnenlicht vernetzen gelassen werden. Vorzugsweise werden die erfindungsgemäßen Massen durch UV-Licht vernetzen gelassen. Als UV-Licht ist solches mit Wellenlängen im Bereich von 200 bis 400 nm bevorzugt. Das UV-Licht kann z.B. in Xenon-, Quecksilbernieder-, Quecksilbermittel-, Quecksilberhochdrucklampen oder Eximerlampen erzeugt werden. Zur Vernetzung durch Licht ist auch solches mit einer Wellenlänge von 400 bis 600 nm, also sogenanntes "Halogenlicht", geeignet.

Bei den zur Vernetzung der erfindungsgemäßen Massen geeigneten Energiequellen kann es sich aber auch um Röntgen-, Gamma- oder Elektronenstrahlen oder um gleichzeitige Anwendung von mindestens zwei verschiedenen Arten solcher Strahlen handeln. Zusätzlich zu der energiereichen Strahlung kann Wärmezufuhr, einschließlich Wärmezufuhr mittels Infrarotlicht, angewendet werden. Eine solche Wärmezufuhr ist jedoch keineswegs erforderlich und vorzugsweise unterbleibt sie, um den Aufwand für Energie zu verringern.

Die Bestrahlungswellenlängen und -dauern sind auf die verwendeten Photopolymerisationsinitiatoren und die zu polymerisierenden Verbindungen abgestimmt.

Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, wie beispielsweise bei -50 bis 15°C oder bei 30 bis 150°C durchgeführt werden. Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Im Vergleich zu nicht vernetzten thermoplastischen Siloxan-Harnstoff-Copolymeren gemäß dem Stand der Technik weisen die Vulkanisate der erfindungsgemäßen Copolymere nach Strahlungsvernetzung eine geringere Abhängigkeit der mechanischen Eigenschaften von der Temperatur auf. Durch die Vernetzung werden die Vulkanisate der erfindungsgemäßen Copolymere bei Temperaturerhöhung nicht mehr plastisch, können also nicht mehr fließen und sind somit formbeständiger. Insgesamt weisen die erfindungsgemäßen Vulkanisate also bessere mechanische Eigenschaften über einen weiteren Temperaturbereich auf, so dass sie in vielfältigeren Einsatzgebieten verwendet werden können.

Die erfindungsgemäßen vernetzbaren Massen werden vorzugsweise als Schmelzkleber, Klebstoff, PSA (Pressure Sensitve Adhesive), Dichtstoff, Beschichtung für beispielsweise Papier, Textil, Fasern oder silikatische Oberflächen, Imprägniermittel, Anstrich, Bestandteil in Verbundwerkstoffen, Additiv für Polymere, Formteil und Komponente für medizinische Zwecke sowie für den Einsatz im Automobilbau oder Laminatglas verwendet.

Die erfindungsgemäßen Massen haben den Vorteil, dass sie alle der obengenannten Vorteile der eingesetzten erfindungsgemäßen Copolymere besitzen.

Die erfindungsgemäßen Massen haben den Vorteil, dass sie sehr gute mechanische Eigenschaften aufweisen.

Weitere Vorteile der erfindungsgemäßen Massen sind die hohe thermische und oxidative Beständigkeit, gute Beständigkeiten gegenüber Quellung und Zersetzung durch polare, organische Lösemittel.

Die erfindungsgemäßen Massen haben den Vorteil, dass die Eigenschaften, wie beispielsweise Schäl- und Ablösefestigkeit, Bedruckbarkeit, Zug- und Durchreißfestigkeit oder Wasserdampfdurchlässigkeit, gezielt eingestellt werden können.

Die erfindungsgemäßen Formkörper haben den Vorteil, dass sie eine geringere Abhängigkeit der mechanischen Eigenschaften vonder Temperatur, insbesondere bei höheren Temperaturen, besitzen.

Die erfindungsgemäßen Formkörper haben des Weiteren den Vorteil, dass sie eine sehr gute Haftung auf Substraten besitzen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

Die Shore-A-Härte wird nach DIN (Deutsche Industrie Norm) 53505 (Ausgabe August 2000) bestimmt.

Zugfestigkeit, Reißdehnung und Modul (Spannung bei 100% Dehnung) wurden nach DIN 53504 (Ausgabe Mai 1994) an Probekörpern der Form S2 bestimmt.

In den folgenden Beispielen erfolgte die Bestrahlung mit einer Xenonlampe in einem Gerät vom Typ "Heraeus Suntest CPS" (550 W/m²) der Fa. Atlas Material Testing Technology GmbH (63589 Linsengericht, Deutschland) (im folgenden "UV-Lampe" genannt).

### Beispiel 1

13 Gewichtsteile eines α,ω-aminopropylterminierten Polydimethylsiloxans einer Viskosität von 50 mPas und 6 Gewichtsteile eines α,ω-aminopropylterminierten Poly(dimethyl-co-methylvinyl)siloxans (Vinyl:Methylgruppen = 1:4) einer Viskosität von 35 mPas werden gemischt (Aminosiloxanmischung).

10,0 kg/h dieser Aminosiloxanmischung werden bei 150°C in den zweiten Sektor (Länge L/D=4) eines gleichläufigen W&P-Doppelschneckenextruders (25 mm Schneckendurchmesser, L/D = 40) dosiert. 0,99 kg/h Isophorondiisocyanat werden bei 175°C im dritten Sektor dosiert. Die Sektoren 3 bis 10 werden auf 175°C gehalten, im vorletzten Sektor wird mit 30 mbar evakuiert. Das Produkt wird mit einer Unterwassergranulierungsanlage der Firma Gala GmbH (Xanten-Birten, Deutschland) granuliert. Es wird ein farbloses, thermoplastisches Granulat erhalten, das in einer Presse bei 170°C zu einer 2 mm dicken Platte gepresst wird; davon werden mechanische Eigenschaften bestimmt. Härte: 56 Shore-A, Zugfestigkeit: 6,05 MPa, Reißdehnung: 680%, Spannungswert bei 100% Dehnung: 1,54 MPa.

### Beispiel 2

10,0 kg/h der in Beispiel 1 beschriebenen Aminosiloxanmischung werden bei 100°C in den zweiten Sektor (Länge L/D=4) eines gleichläufigen W&P-Doppelschneckenextruders (25 mm Schneckendurchmesser, L/D = 40) dosiert. 1,09 kg/h Tetramethylxylylendiisocyanat werden bei 150°C im dritten Sektor dosiert. Die restlichen Sektoren (3 bis 10) werden auf 160°C gehalten, im vorletzten Sektor wird mit 30 mbar evakuiert. Das Produkt wird mit einer Unterwassergranulierungsanlage der Firma Gala GmbH (Xanten-Birten, Deutschland) granuliert. Es wird ein farbloses, thermoplastisches Granulat erhalten, das in einer Presse bei 170°C zu einer 2 mm dicken Platte gepresst wird; davon werden mechanische Eigenschaften bestimmt. Härte: 61 Shore-A, Zugfestigkeit: 4,14 MPa, Reißdehnung: 573%, Spannungswert bei 100% Dehnung: 2,39 MPa.

### Beispiel 3

70 g des in Beispiel 1 hergestellten Granulats werden in 350 g Tetrahydrofuran (THF) gelöst. 17,5 g eines α,ω-trimethylsilylterminierten Polydimethylsiloxans mit einer Viskosität von 10 mPas, 11,7 g Tetrahydrofurfurylacrylat, 1,4 g α,ω-Dimethoxy-ω-phenylacetophenon (Benzildimethylketal) werden eingemischt. Die Lösung wird in eine ca. 2 mm tiefe PTFE-Form gegossen und das Lösungsmittel unter Lichtausschluss verdampft. Das wird so oft wiederholt bis 2 mm dicke Folien erhalten werden, aus denen Prüfkörper gestanzt werden. Mechanische Kennwerte für S2-Stäbe sind in Tabelle 1 gegeben.

Eine der hergestellten Folien wird 1 Minute, eine zweite Folie 5 Minuten mit der oben beschriebenen UV-Lampe bestrahlt. Mechanische Kennwerte für S2-Stäbe sind in Tabelle 1 gegeben.

### Beispiel 4

70 g des in Beispiel 1 hergestellten Granulats werden in 350 g Tetrahydrofuran (THF) gelöst. 17,5 g eines α,ω-trimethylsilylterminierten Polydimethylsiloxans mit einer Viskosität von 10 mPas, 11,7 g Butandioldimethacrylat, 1,4 g α,ω-Dimethoxy-ω-phenylacetophenon werden eingemischt. Die Lösung wird in eine ca. 2 mm tiefe PTFE-Form gegossen und das Lösungsmittel unter Lichtausschluss verdampft. Das wird so oft wiederholt bis 2 mm dicke Folien erhalten werden, aus denen Prüfkörper gestanzt werden. Mechanische Kennwerte für S2-Stäbe sind in Tabelle 1 gegeben.

Eine der hergestellten Folien wird 1 Minute, eine zweite Folie 5 Minuten mit der oben beschriebenen UV-Lampe bestrahlt. Mechanische Kennwerte für S2-Stäbe sind in Tabelle 1 gegeben.

### Beispiel 5

70 g des in Beispiel 1 hergestellten Granulats werden in 350 g Tetrahydrofuran (THF) gelöst. 17,5 g eines α,ω-trimethylsilylterminierten Polydimethylsiloxans mit einer Viskosität von 10 mPas, 11,7 g Acrylsäuredodecylester, 1,4 g α,ω-Dimethoxy-ω-phenylacetophenon werden eingemischt. Die Lösung wird in eine ca. 2 mm tiefe PTFE-Form gegossen und das Lösungsmittel unter Lichtausschluss verdampft. Das wird so oft wiederholt bis 2 mm dicke Folien erhalten werden, aus denen Prüfkörper gestanzt werden. Mechanische Kennwerte für S2-Stäbe sind in Tabelle 1 gegeben.

Eine der hergestellten Folien wird 1 Minute eine zweite Folie 5 Minuten mit der oben beschriebenen UV-Lampe bestrahlt. Mechanische Kennwerte für S2-Stäbe sind in Tabelle 1 gegeben.

**Tabelle 1:**

| Beispiele | Härte [Shore A] | Zugfestigkeit [MPa] | Reißdehnung [%] | Spannungswert 100% Dehnung [MPa] |
|---|---|---|---|---|
| Beispiel 3 unbestrahlt | 5 | 0,52 | 927 | 0,11 |
| Beispiel 3 1 min UV-Lampe | 21 | 1,88 | 647 | 0,28 |
| Beispiel 3 5 min UV-Lampe | 25 | 1,56 | 413 | 0,35 |
| Beispiel 4 unbestrahlt | 3 | 0,19 | 1387 | 0,08 |
| Beispiel 4 1 min UV-Lampe | 7 | 1,30 | 770 | 0,17 |
| Beispiel 4 5 min UV-Lampe | 26 | 1,31 | 330 | 0,51 |
| Beispiel 5 unbestrahlt | 10 | 0,75 | 868 | 0,16 |
| Beispiel 5 1 min UV-Lampe | 14 | 1,58 | 569 | 0,28 |
| Beispiel 5 5 min UV-Lampe | 20 | 1,49 | 373 | 0,41 |

## Patentansprüche

1. Vernetzbare Massen enthaltend
(i) Copolymere der allgemeinen Formel
**R'-[(A)ₐ(B)_{b}(C)_{c}]-R"** **(I),**
worin
(A) gleich oder verschieden sein kann und eine Einheit der Formel **(II)**
**-[CO-NH-Z-NH-CO-ND-Y-Si(OR¹)ₒR₂₋ₒ-(O-SiR_{q}R⁵_{2-q})ₙ-O-Si(OR¹)ₒR₂₋ₒ-Y-ND]-,**
(B) gleich oder verschieden sein kann und eine Einheit der Formel
**-[CO-NH-Z-NH-CO-NR⁴-G-NR⁴]-** **(III)**
und
(C) gleich oder verschieden sein kann und eine Einheit der Formel
**-[CO-NH-Z-NH-CO-E-X-E]-** **(IV)**
darstellen, wobei
**X** gleich oder verschieden sein kann und einen gegebenenfalls durch Fluor, Chlor, C₁-C₆-Alkyl- oder C₁-C₆-Alkylester sub- stituierten Alkylenrest mit 1 bis 700 Kohlenstoffatomen bedeutet, in dem einander nicht benachbarte Methylenein- heiten durch Gruppen -O-, -COO-, -OCO- oder -OCOO- ersetzt sein können, oder gegebenenfalls substituierten Arylenrest mit 6 bis 22 Kohlenstoffatomen bedeutet,
**Y** gleich oder verschieden sein kann und einen zweiwertigen Kohlenwasserstoffrest mit 1 bis 30 Kohlenstoffatomen, in dem einander nicht benachbarte Methyleneinheiten durch Gruppen -O- ersetzt sein können, oder den Rest -(CH₂)₃-NH- SiR₂-(CH₂)₃-NH- darstellt,
**Z** gleich oder verschieden sein kann und einen zweiwertigen, gegebenenfalls durch Fluor oder chlor substituierten Koh- lenwasserstoffrest mit 1 bis 30 Kohlenstoffatomen bedeu- tet,
**D** gleich oder verschieden sein kann und Wasserstoffatom oder einen einwertigen, gegebenenfalls substituierten Kohlen- wasserstoffrest darstellt,
**E** gleich oder verschieden sein kann und ein Sauerstoffatom oder eine Aminogruppe -ND- darstellt,
**R** gleich oder verschieden sein kann und einen einwertigen, gegebenenfalls durch Fluor oder Chlor substituierten Koh- lenwasserstoffrest mit 1 bis 20 Kohlenstoffatomen bedeu- tet,
**R¹** gleich oder verschieden sein kann und Wasserstoffatom oder einen einwertigen, gegebenenfalls durch Fluor, Chlor oder Organyloxygruppen substituierten Kohlenwasserstoffrest mit 1 bis 20 Kohlenstoffatomen, -(C=O)-R oder -N=CR₂ darstellt,
**R⁴** gleich oder verschieden sein kann und einen Rest der For- mel -Z'-SiRₚ(OR¹)₃₋ₚ mit Z' gleich einer für Z oben angege- benen Bedeutung und p gleich 0, 1 oder 2, Wasserstoffatom oder einen einwertigen, gegebenenfalls substituierten Koh- lenwasserstoffrest bedeutet,
**R⁵** gleich oder verschieden sein kann und einen einwertigen, gegebenenfalls substituierten, gegebenenfalls durch sauer- stoffatome unterbrochenen, aliphathische Kohlenstoff- Kohlenstoff-Mehrfachbindung aufweisenden Kohlenwasser- stoffrest bedeutet,
**G** gleich oder verschieden sein kann und eine für Z angegebe- ne Bedeutung hat,
**R"** Wasserstoffatom oder einen Rest -CO-NH-Z-NCO bedeutet,
**R'** **im Fall von R" gleich Wasserstoffatom** einen Rest HND-Y-Si(OR¹)ₒR₂₋ₒ-(O-SiR_{q}R⁵_{2-q})ₙ-O-Si(OR¹)ₒR₂₋ₒ-Y-ND-, HNR⁴-G-NR⁴- oder HE-X-E- bedeutet und **im Fall von R" gleich Rest -CO-NH-Z-NCO** die Bedeutung von Rest OCN-Z-NH-CO-ND-Y-Si(OR¹)ₒR₂₋ₒ-(O-SiR_{q}R⁵_{2-q})ₙ-O-Si(OR¹)ₒR₂₋ₒ-Y- ND-, OCN-Z-NH-CO-NR⁴-G-NR⁴- oder OCN-Z-NH-CO-E-X-E- hat,
**n** gleich oder verschieden sein kann und eine ganze Zahl von 1 bis 4000 ist,
**o** gleich oder verschieden sein kann und 0, 1 oder 2 ist,
**q** 0 oder 1 ist,
**a** eine ganze Zahl von mindestens 1 ist,
**b** 0 oder eine ganze Zahl von mindestens 1 ist
**c** 0 oder eine ganze Zahl von mindestens 1 ist,
mit der Maßgabe, dass im Molekül mindestens ein Rest R⁵ vorhanden ist sowie die einzelnen Blöcke (A), (B) und (C) im Polymer statistisch verteilt sein können, gegebenenfalls
(ii) mindestens einen vernetzer,
(iii) einen Photopolymerisationsinitiator,
gegebenenfalls
(iv) Füllstoff,
gegebenenfalls
(v) Haftvermittler,
gegebenenfalls
(vi) weitere Stoffe ausgewählt aus der Gruppe enthaltend Weichmacher, stabilisatoren, Antioxidantien, Flammschutzmittel, Lichtschutzmittel und Pigmente,
gegebenenfalls
(vii) vernetzbare Polymere, die unterschiedlich sind zu (i), und gegebenenfalls
(viii) Polymerisationsinhibitoren.

2. Vernetzbare Massen nach Anspruch 1, **dadurch gekennzeichnet, dass** R⁵ die Bedeutung von vinylrest hat.

3. Vernetzbare Massen nach Anspruch 1 oder 2, **dadurch gekennzeichnet, dass** a die Bedeutung einer ganzen Zahl von 5 bis 1000 hat.

4. vernetzbare Massen nach einem oder mehreren der Ansprüche 1 bis 3, **dadurch gekennzeichnet, dass** b gleich 0 ist.

5. Vernetzbare Massen nach einem oder mehreren der Ansprüche 1 bis 4, **dadurch gekennzeichnet, dass** c gleich 0 ist.

6. Vernetzbare Massen nach einem oder mehreren der Ansprüche 1 bis 5, **dadurch gekennzeichnet, dass** es sich bei 1 bis 20 % aller SiC-gebundenen Reste im Polymer der Formel (I) um Reste R⁵ handelt.

7. Formkörper, hergestellt durch Vernetzung der Massen gemäß einem oder mehreren der Ansprüche 1 bis 6.

## Claims

1. Crosslinkable compositions comprising
(i) copolymers of the general formula
**R'-[(A)ₐ(B)_{b}(C)_{c}]-R"** **(I),**
in which
(A) can be alike or different and is a unit of the formula **(II)**
**-[CO-NH-Z-NH-CO-ND-Y-Si(OR¹)ₒR₂₋ₒ-(O-SiR_{q}R⁵_{2-q})ₙ-O-Si(OR¹)ₒR₂₋ₒ-Y-ND]-,**
(B) can be alike or different and is a unit of the formula
**-[CO-NH-Z-NH-CO-NR⁴-G-NR⁴]-** **(III)**
and
(C) can be alike or different and is a unit of the formula
**-[CO-NH-Z-NH-CO-E-X-E]-** **(IV)**
where
**X** can be alike or different and is an alkylene radical which has 1 to 700 carbon atoms, which is unsubstituted or substituted by fluorine, chlorine, C₁-C₆ alkyl or C₁-C₆ alkyl ester and in which methylene units not adjacent to one another can be replaced by groups -O-, -COO-, -OCO- or -OCOO-, or is unsubstituted or substituted arylene radical having 6 to 22 carbon atoms,
**Y** can be alike or different and is a divalent hydrocarbon radical which has 1 to 30 carbon atoms and in which methylene units not adjacent to one another can be replaced by groups -O-, or is the radical -(CH₂)₃-NH-SiR₂-(CH₂)₃-NH-,
**Z** can be alike or different and is a divalent hydrocarbon radical which has 1 to 30 carbon atoms and is unsubstituted or substituted by fluorine or chlorine,
**D** can be alike or different and is hydrogen atom or a monovalent, unsubstituted or substituted hydrocarbon radical,
**E** can be alike or different and is an oxygen atom or an amino group -ND-,
**R** can be alike or different and is a monovalent hydrocarbon radical which has 1 to 20 carbon atoms and is unsubstituted or substituted by fluorine or chlorine,
**R¹** can be alike or different and is hydrogen atom or a monovalent hydrocarbon radical which has 1 to 20 carbon atoms and is unsubstituted or substituted by fluorine, chlorine or organyloxy groups, or is -(C=O)-R or -N=CR₂,
**R⁴** can be alike or different and is a radical of the formula -Z'-SiRₚ(OR¹)₃₋ₚ with Z' equal to a definition specified above for Z, and p being 0, 1 or 2, or is hydrogen atom or a monovalent, unsubstituted or substituted hydrocarbon radical,
**R⁵** can be alike or different and is a monovalent hydrocarbon radical which is optionally substituted, optionally interrupted by oxygen atoms and has an aliphatic carbon-carbon multiple bond,
**G** can be alike or different and has a definition specified for Z,
**R"** is hydrogen atom or a radical -CO-NH-Z-NCO,
**R'** if R" is hydrogen atom is a radical HND-Y-Si(OR¹)ₒR₂₋ₒ-(O-SiR_{q}R⁵_{2-q})ₙ-O-Si(OR¹)ₒR₂₋ₒ-Y-ND-, HNR⁴-G-NR⁴- or HE-X-E-, and if R" is radical -CO-NH-Z-NCO has the definition of radical OCN-Z-NH-CO-ND-Y-Si(OR¹)ₒR₂₋ₒ-(O-SiR_{q}R⁵_{2-q})ₙ-O-Si(OR¹)ₒR₂₋ₒ- Y-ND-, OCN-Z-NH-CO-NR⁴-G-NR⁴- or OCN-Z-NH-CO-E-X-E-,
**n** can be alike or different and is an integer from 1 to 4000,
**o** can be alike or different and is 0, 1 or 2,
**q** is 0 or 1,
**a** is an integer of at least 1,
**b** is 0 or an integer of at least 1,
**c** is 0 or an integer of at least 1,
with the proviso that in the molecule at least one radical R⁵ is present and also the individual blocks (A), (B) and (C) can be distributed randomly in the polymer, if desired
(ii) at least one crosslinker,
(iii) a photopolymerization initiator,
if desired
(iv) filler,
if desired
(v) adhesion promoter,
if desired
(vi) further substances selected from the group containing plasticizers, stabilizers, antioxidants, flame retardants, light stabilizers, and pigments,
if desired
(vii) crosslinkable polymers different to (i),

2. Crosslinkable compositions according to Claim 1, **characterized in that** R⁵ has the definition of vinyl radical.

3. Crosslinkable compositions according to Claim 1 or 2, **characterized in that** a has the definition of an integer from 5 to 1000.

4. Crosslinkable compositions according to one or more of Claims 1 to 3, **characterized in that** b is 0.

5. Crosslinkable compositions according to one or more of Claims 1 to 4, **characterized in that** c is 0.

6. Crosslinkable compositions according to one or more of Claims 1 to 5, **characterized in that** 1% to 20% of all of the SiC-bonded radicals in the polymer of the formula (I) are radicals R⁵.

7. Moldings produced by crosslinking the compositions according to one or more of Claims 1 to 6.

## Revendications

1. Matières réticulables contenant
(i) des copolymères de formule générale
**R'-[(A)ₐ(B)_{b}(C)_{c}]-R"** **(I)**
dans laquelle
(A) peut être le même ou différent et représente une unité de formule **(II)**
**-[CO-NH-Z-NH-CO-ND-Y-Si(OR¹)ₒR₂₋ₒ-(O-SiR_{q}R⁵_{2-q})ₙ-O-Si(OR¹)ₒR₂₋ₒ-Y-ND]-,**
(B) peut être le même ou différent et représente une unité de formule
**-[CO-NH-Z-NH-CO-NR⁴-G-NR⁴]-** **(III)**
et
(C) peut être le même ou différent et représente une unité de formule
**-[CO-NH-Z-NH-CO-E-X-E]-** **(IV)**
où
**X** peut être le même ou différent et représente un radical alkylène ayant de 1 à 700 atomes de carbone, éventuellement substitué par le fluor ou le chlore ou par alkyle en C₁-C₆ ou ester alkylique en C₁-C₆, dans lequel des unités méthylène non contiguës peuvent être remplacées par des groupes -O-, -COO-, -OCO- ou -OCOO-, ou représente un radical arylène éventuellement substitué, ayant de 6 à 22 atomes de carbone,
**Y** peut être le même ou différent et représente un radical hydrocarboné divalent ayant de 1 à 30 atomes de carbone, dans lequel des unités méthylène non contiguës peuvent être remplacées par des groupes -O-, ou le radical -(CH₂)₃-NH-SiR₂-(CH₂)₃-NH-,
**Z** peut être le même ou différent et représente un radical hydrocarboné ayant de 1 à 30 atomes de carbone, éventuellement substitué par le fluor ou le chlore,
**D** peut être le même ou différent et représente un atome d'hydrogène ou un radical hydrocarboné monovalent, éventuellement substitué,
**E** peut être le même ou différent et représente un atome d'oxygène ou un groupe amino -ND-,
**R** peut être le même ou différent et représente un radical hydrocarboné monovalent ayant de 1 à 20 atomes de carbone, éventuellement substitué par le fluor ou le chlore,
**R¹** peut être le même ou différent et représente un atome d'hydrogène ou un radical hydrocarboné monovalent ayant de 1 à 20 atomes de carbone, éventuellement substitué par le fluor ou le chlore ou par des groupes organyloxy, ou représente -(C=O)-R ou -N=CR₂, **R⁴** peut être le même ou différent et représente un radical de formule -Z'-(SiRₚ(OR')₃₋ₚ, dans laquelle **Z'** a la signification indiquée plus haut pour Z et p est égal à 0, 1 ou 2, un atome d'hydrogène ou un radical hydrocarboné monovalent, éventuellement substitué,
**R⁵** peut être le même ou différent et représente un radical hydrocarboné monovalent comportant une liaison multiple carbone-carbone aliphatique, éventuellement substitué, éventuellement interrompu par des atomes d'oxygène,
**G** peut être le même ou différent et a une signification indiquée pour Z,
**R"** représente un atome d'hydrogène ou un radical -CO-NH-Z-NCO,
**R'** **lorsque R" est un atome d'hydrogène,** représente un radical HND-Y-Si(OR¹)ₒR₂₋ₒ-(O-SiR_{q}R⁵_{2-q})ₙ-O-Si(OR¹)ₒR₂₋ₒ- Y-ND-, HNR⁴-G-NR⁴- ou HE-X-E- et **lorsque R" est un radical -CO-NH-Z-NCO**, a la signification d'un radical OCN-Z-NH-CO-ND-Y-Si(OR¹)ₒR₂₋ₒ-(O-SiR_{q}R⁵_{2-q})ₙ-O- Si(OR¹)ₒR₂₋ₒ-Y-ND, OCN-Z-NH-CO-NR⁴-G-NR⁴- ou OCN-Z-NH-CO-E-X-E-,
**n** peut être le même ou différent et est un nombre entier allant de 1 à 4 000,
**o** peut être le même ou différent et est égal à 0, 1 ou 2,
**q** est 0 ou 1,
**a** est un nombre entier au moins égal à 1,
**b** est 0 ou un nombre entier au moins égal à 1,
**c** est 0 ou un nombre entier au moins égal à 1,
étant entendu qu'au moins un radical R⁵ est présent dans la molécule et que les séquences individuelles (A), (B) et (C) dans le polymère peuvent être en distribution statistique, éventuellement
(ii) au moins un agent de réticulation,
(iii) un amorceur de photopolymérisation,
éventuellement
(iv) une charge,
éventuellement
(v) un promoteur d'adhérence,
éventuellement
(vi) d'autres substances choisies dans le groupe contenant des plastifiants, des stabilisants, des antioxydants, des agents ignifuges, des photoprotecteurs et des pigments,
éventuellement
(vii) des polymères réticulables qui sont différents de (i),
et éventuellement
(viii) des inhibiteurs de polymérisation.

2. Matières réticulables selon la revendication 1, **caractérisées en ce que** R⁵ représente le groupe vinyle.

3. Matières réticulables selon la revendication 1 ou 2, **caractérisées en ce que** a représente un nombre entier allant de 5 à 1 000.

4. Matières réticulables selon une ou plusieurs des revendications 1 à 3, **caractérisées en ce que** b est égal à 0.

5. Matières réticulables selon une ou plusieurs des revendications 1 à 4, **caractérisées en ce que** c est égal à 0.

6. Matières réticulables selon une ou plusieurs des revendications 1 à 5, **caractérisées en ce que** 1 à 20 % de tous les radicaux liés à SiC dans le polymère de formule (I) consistent en des radicaux R⁵.

7. Corps moulés, produits par réticulation des matières selon une ou plusieurs des revendications 1 à 6.
